# EUROPEAN PATENT SPECIFICATION

(11) **EP 1 562 824 B1**
(45) Date of publication and mention of the grant of the patent: **24.01.2007**
(21) Application number: 03780623.9
(22) Date of filing: 06.11.2003
(51) Int. Cl.: B63H 9/06

(54) **THREE-DIMENSIONAL SAIL WITH LAMINATED STRUCTURE AND CONSTRUCTION METHOD**
DREIDIMENSIONALES SEGEL MIT LAMINIERTER STRUKTUR UND HERSTELLUNGSMETHODE
VOILE TRIDIMENSIONNELLE A STRUCTURE LAMINEE ET SON PROCEDE DE FABRICATION

(30) Priority: 08.11.2002 IT AN20020051
(43) Date of publication of application: 17.08.2005
(73) Proprietor: Studio Merani di Merani Michele E C. S.A.S., 62012 Civitanova Marche (IT)
(72) Inventor: MERANI, Michele, I-62012 Civitanova Marche (IT)
(74) Representative: Baldi, Claudio
(86) International application number: PCT/IT2003/000721
(87) International publication number: WO 2004/041636

(56) References cited:
- EP-A- 0 249 427
- WO-A-98/48133
- US-B1- 6 302 044
- US-B1- 6 382 120

## Description

The present patent application for industrial invention refers to a sail with laminated structure, and relevant construction method, in which the bearing layer is composed of a fan-shaped series of bundles of parallel threads, partially overlapped and oriented according to the direction of the lines of force of the stress applied to the sail in operation.

The sail of the invention is manufactured according to a traditional technique, by joining together a fan-shaped series of suitably-shaped flat panels, in such a way that their ordered combination results in a large single piece having the shape and three-dimensional profile of a sail, with a concave side, capable of capturing the wind, and a convex side.

In modem sails, panels no longer consist in simple pieces of cloth. They are made of laminated fabrics that include several overlapped layers of thin sheets of flexible and impermeable material, with an intermediate bearing layer made of multiple threads that must support the entire load withstood by the sail when the sail is subjected to the strength of the wind.

To that end, the threads are laid along the direction of the lines of force that can be foreseen based on the dimensional, geometrical and aerodynamic characteristics of the sail.

The European patent EP 0249427 discloses a sail of this type, made up of multiple panels joined together, with each panel being formed of at least two non-bearing layers with an intermediate laminated bearing layer made up of a fan-shaped series of threads in non-parallel position.

The aforementioned European patent states that the location of each panel with respect to the entire surface of the sail must be taken into consideration in order to orient the threads according to the direction of the lines of force in the portion of the sail where the panel is located.

For example, in the case of a jib, in the three panels located in the cap, clew and tack of the sail, the individual threads diverge in a radial way from the three angles, knowing that the lines of force converge in the three angles.

Vice versa, in the intermediate panels that join the highest panel (cap) and the two lowest panels (clew and tack, respectively), the individual threads are laid one next to each other in non-parallel position, oriented towards the direction in which the lines of force go across the intermediate panels.

The largest inconvenience during the construction of sails made up of multiple laminated panels is represented by the difficulties encountered in providing uniform tension to the diverging bundle of threads that are usually subjected to pre-load in order to increase the sail resistance.

Uniformity is extremely important for the sail to obtain a correct aerodynamic three-dimensional profile and guarantee correct resistance values.

The purpose of the invention is to devise a new construction method for three-dimensional sails made up of multiple flat laminated panels, capable of facilitating the uniform tensioning of all threads of the bearing layer of each laminated panel.

Another purpose of the invention is to devise a new construction method for three-dimensional sails made up of multiple flat laminated panels, which provides for the realisation of reinforced areas in the panel, in which overlapped threads create a grid capable of locally increasing the resistance of the laminated panels.

A further purpose of the invention is to devise a new construction method for three-dimensional sails made up of multiple flat laminated panels, which provides a variety of options in terms of location, extension and density of the areas reinforced by means of a grid of overlapped threads.

The aforementioned primary and secondary purposes are achieved by the construction method of the invention, which is based on the realisation of the bearing layer by means of multiple bundles of parallel threads, where each bundle is tilted with respect to the adjacent bundle, being provided that the bundles of threads near the external borders of the sail are oriented in parallel direction to the borders.

In other words, it can be said that the bearing layer is made with a fan-shaped series of bundles of parallel threads that are overlapped with higher density and larger surface near the rotation centre of the fan-shaped series of bundles of parallel threads.

It appears evident that the location, extension and density of the areas reinforced by means of a grid of overlapped threads can be varied as desired, choosing from time to time - according to the geometrical shape and characteristics of the sail - the number of threads for each bundle and/or the distance between the threads in each bundle and/or the inclination angle between two adjacent bundles of parallel threads.

The closest prior art US 6302044 patent discloses a process used to obtain a sail body by seaming pre-fabricated sail sections, each of them being formed of laminate made of two external films reinforced through the interposition of an intermediate reinforcement layer.

The intermediate layer is formed of different sectors obtained by cutting prepeg material, thus obtaining "sectors" of various shapes and sizes, typically triangular and quadrilateral.

The US patent repeatedly affirms that the material can be a mesh, scrim, or net, which comprises a series of first parallel reinforcement elements and a series of second parallel reinforcement elements perpendicular to the series of first elements.

Therefore, a substantial difference exists between the sail described in the US 6302044 patent and the sail of the present invention, since the first sail uses a mesh of perpendicular threads as reinforcement layer, and the second sail uses a fan-shaped series of bundles of parallel threads.

However, the most important difference consists in that the bundles of parallel threads are laid and stretched out, thread after thread, directly on the flexible sheets used to create the laminated section of the sail, and are not included in a pre-fabricated material.

Following is a description of the main advantages arising from using a bundle of parallel thread as reinforcement layer, instead of a pre-fabricated material formed of a mesh of threads:
- the bundle of parallel threads can be pre-tensioned easily;
- the bundle of parallel threads can be obtained from threads with different density, diameter and material, according to the specific requirements;
- the bundle of parallel threads is lighter and more flexible than a mesh of threads.

For major clarity the description of the invention continues with reference to the enclosed drawings, which are intended for purposes of illustration and not in a limiting sense, whereby:

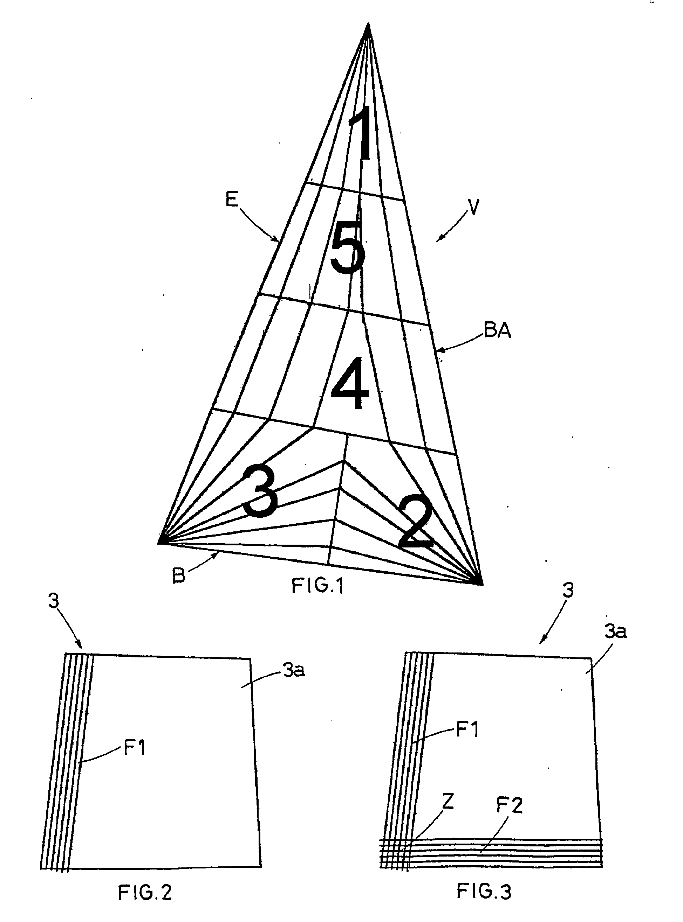

- Fig. 1 is a view of a typical jib, in which load lines are diagrammatically shown;
- Figs. 2 to 5 shows four different steps in the lamination process of the clew panel;
- Figs. 6 to 8 show three clew panels with a different structure of bundles of parallel threads;
- Figs. 9 to 11 show four different steps in the lamination process of the intermediate panel of the sail;
With reference to Fig. 1, the method of the invention is used to manufacture a jib or Genoa type of sail (V), by dividing the entire surface of the sail into five different panels (1, 2, 3, 4 and 5), i.e.:
- cap (1)
- tack (2)
- clew (3)
- two intermediate panels (4 and 5)

With reference to Figs. 2 to 5, the description continues with the realisation of the clew (3) according to the construction method of the invention.

First of all, it must be noted that each panel is made up of at least two external layers of thin flexible impermeable material, between which an intermediate bearing layer made up of multiple threads is glued.

The first external layer (3a) is laid over a working surface used to perform the entire lamination process of the clew (3).

As shown in Fig. 2, the first bundle of parallel threads (F1) is laid along the entry (E) of the sail (V) in parallel direction, while the second bundle of parallel threads (F2) is laid along the base (B) of the sail (V) in parallel position, in such a way that a crossing and overlapping area (Z) is created between the two bundles (F1 and F2) in the clew angle.

The area (Z) is the rotation centre for the next fan-shaped series of bundles of parallel threads (F3, F4, ...Fn).

Once the fan-shaped series of bundles of parallel threads has been completed, the lamination process of the clew (3) is performed by laying and gluing a second external layer over the fan-shaped series of parallel threads.

A detailed (step by step) list, of the operational phases of the construction method illustrated above for the realisation of the clew (3) are mentioned here below:
a) laying of a first external layer (3a) over a working surface;
b) laying and tensioning of a first bundle of parallel threads (F1) over said external layer (3a), located in parallel direction with respect to the side (E) of the sail (V);
c) laying and tensioning of a second bundle of parallel threads (F2) over said external layer (3a) and over said first bundle (F1), but located in parallel direction to the base side (B) of the sail (V), so as to create a crossing and overlapping area (Z) of the first bundle of threads (F1) and the second bundle of threads (F2);
d) laying and tensioning of series of bundles of parallel threads (F3, F4,.....Fn) positioned one next to the other, in a fan-shape arrangement having rotation centre in the said area (Z);
e) laying and gluing of a second external layer (3a) over the fan-shaped series of bundles of parallel threads (F1, F2, F3, F4....Fn)

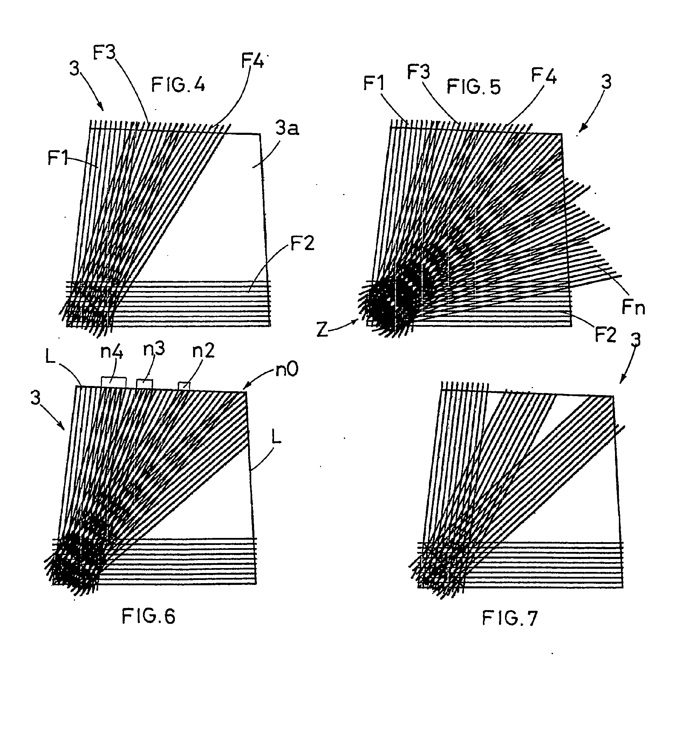

Fig. 6 shows that by changing the inclination angle between two adjacent bundles of parallel threads, it is possible to choose the number (n0, n2, n3, n4) of threads that cross over on the borders (L) of the clew (3) sewn to the adjacent panels.

Fig. 7 shows that, by choosing a suitable inclination angle, the distance between the intersection area of the bundles of parallel threads and the borders (L) of the clew (3) sewn to the adjacent panels can be changed as desired.

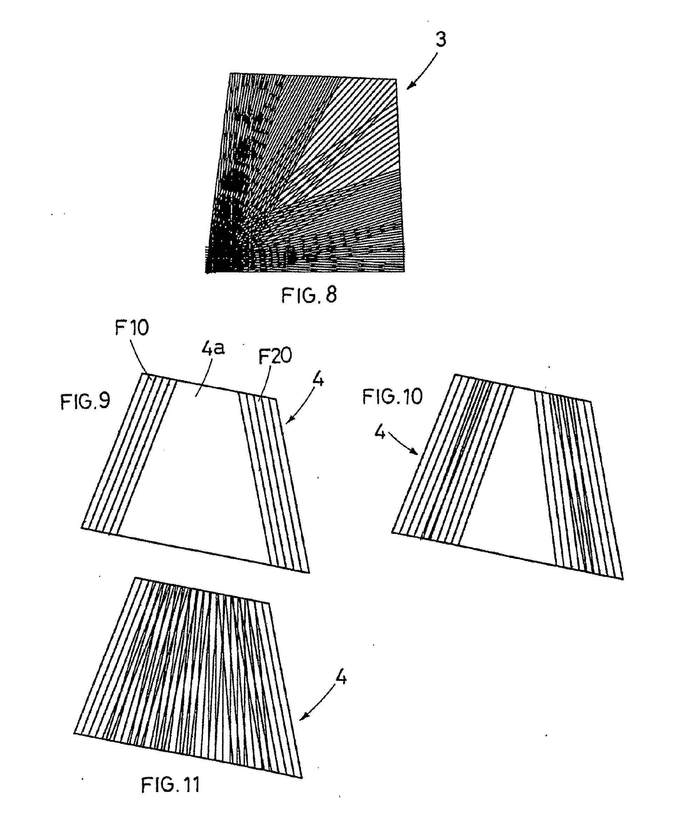

Fig. 8 shows a clew (3) made of bundles of parallel threads with different width and density at different inclination angles. Fig. 8 shows the large number of possible combinations and variants provided by the construction method of the invention.

With reference to Fig. 8, it must be noted that the reinforcement of the angle with highest stress is automatically carried out when laying down the different bundles of parallel threads, whose superimposition indirectly generates reinforced areas that, according to traditional construction methods, require the oriented application of laminated inserts that must be fixed to the sail in such a way that the thread warp is perpendicular to the thread warp in the area to be reinforced.

The cap (1) and tack (2) are obviously realised with the same constructive modes as the clew (3).

With reference to Figs. 9 to 11, the description continues with the realisation of the intermediate panel of the sail (4) according to the construction method of the invention.

As mentioned above, the first external layer (4a) is laid over a working surface used to perform the entire lamination process of the intermediate panel (4).

As shown in Fig. 9, the first bundle of parallel threads (F10) is laid along the entry (E) of the sail (S) in parallel direction, while the second bundle of parallel threads (F20) is laid along the leech (BA) of the sail (V) in parallel position, knowing that the lines of force near the entry (E) and leech (BA) are basically parallel to the borders of the sail (V).

Additional intermediate bundles of parallel threads are then laid to reinforce the entire surface of the sail included between the two external bundles (F10 and F20), by inclining each intermediate bundle with respect to the immediately preceding bundle, in such a way that each bundle of parallel threads is given the same orientation as the lines of force in the portion of the sail where the bundle of threads which is being applied has to be laid.

In this case, reference can be indifferently made to one or more rotation centres for the fan-shaped series of bundles of parallel threads.

For instance, the intermediate panel (4) of Fig. 11 has a fan-shaped series of bundles of parallel threads that originate from different imaginary rotation centres located outside of the panel.

Once the fan-shaped series of bundles of parallel threads has been completed, the lamination process of the intermediate panel (4) is performed by laying and gluing a second external layer over the fan-shaped series of threads.

A detailed (step by step) list, of the operational phases of the construction method illustrated above for the realisation of the intermediate panel (4) are mentioned here below:
a) laying of a first external layer (4a) over a working surface;
b) laying and tensioning of a first bundle of parallel threads (F10) over said external layer (4a), located in parallel direction with respect to the side (E) of the sail (V);
c) laying and tensioning of a second bundle of parallel threads (F20) over said external layer (4a) and over said first bundle (F10), but located in parallel direction to the leech (BA) of the sail (V);
d) laying and tensioning of series of partially superposed bundles of parallel threads (F3, F4,.....Fn) positioned one next to the other, in the area between the first bundle of parallel threads (F10) and the second bundle of parallel threads (F20) in a way such that each intermediate bundle is inclined with respect to the immediately preceding bundle, so that each intermediate bundle is given the same orientation as the lines of force of the area of the sail where the intermediate panel (4) is located and in the portion of the sail where the intermediate bundle of parallel threads is being applied as to be laid;
e) laying and gluing of a second external layer (4a) over the fan-shaped series of bundles of parallel threads.

Finally, attention is drawn on the fact that the characteristic of the construction method of the invention, that is to say the capability of facilitating uniform tensioning of all threads of the bearing layer of the sail, originates from the presence of bundles of parallel threads with desired pre-load value by means of simple extensible support frames.

For illustrative purposes only, it must be noted that the two external layers of each laminated panel can be made of polyester or polypropylene film, while the intermediate bearing layer made of a fan-shaped series of bundles of parallel threads may be made of polyester, aramidic fibres and carbon yarns.

## Claims

1. Construction method for three-dimensional sails made up of multiple flat laminated panels (1,2,3,4,5) combined together, in which each flat laminated panel is made up of at least two external flat layers (3a, 4a), made of thin flexible sheets of a suitable material, with an intermediate flat bearing layer made up of multiple threads laid according to the direction of the lines of force across the panel, method **characterized in that** each of said laminated panels is realised according to the following process:
a) laying of a first external layer (3a,4a) over a working surface;
b) laying and tensioning of a first bundle of parallel threads (F1,F10) over said external layer (3a), appropriately oriented, over said first external layer (3a, 4a);
c) laying and tensioning of a second bundle of parallel threads (F2,F20), appropriately oriented over said external layer (3a,4a
d) laying and tensioning of series of bundles of parallel threads appropriately oriented and positioned in the area between the first bundle of threads (F1,F10) and the second bundle of threads (F2,F20)
e) laying and gluing of a second external layer (3a) over the fan-shaped series of bundles of all the parallel threads.

2. Method as defined in the preceding claim, **characterised in that** the bearing layer of the cap (1), tack (2) and clew (3) is composed of a fan-shaped series of bundles of parallel threads (F1, F2, F3,...Fn) originating from a rotation centre that coincides with the intersection area of the first and second bundle of parallel threads (F1 e F2) that are respectively laid along the two sides of the panel that are a segment of the external borders of the sail (V).

3. Method as defined in claim 1, **characterised in that** the bearing layer of the intermediate panels (4 and 5) is composed of a fan-shaped series of bundles of parallel threads (F10, F20, ...), where each bundle is inclined with respect to the immediately preceding bundle and oriented in the same direction as the lines of force in the portion of the sail where the bundle of parallel threads is laid.

4. Method as defined in claim 3, **characterised in that** the fan-shaped series of bundles of parallel threads of the intermediate panel originates from different imaginary rotation centres located outside of the panel.

5. Method as defined in the preceding claims, **characterised in that** in each panel each bundle of parallel threads is the same as the other bundles in terms of width and number of threads.

6. Method as defined in claims 1 to 4, **characterised in that** in each panel each bundle of parallel threads differs from the other bundles in terms of width and/or number of threads.

7. Method as defined in the preceding claims, **characterised in that** in each panel each bundle of parallel threads has the same inclination angle as the preceding bundle.

8. Method as defined in claims 1 to 6, **characterised in that** in each panel each bundle of parallel threads has a different inclination angle with respect to the preceding bundle.

9. Three-dimensional sail formed by multiple flat laminated panels (1,2,3,4,5) joined together, in which each flat laminated panel is formed of at least two external flat layers (3a, 4a) made of thin flexible sheets of a suitable material, with an intermediate flat bearing layer made up of multiple threads laid according to the direction of the lines of force across the panel, being **characterised in that** the bearing layer is composed of a fan-shaped series of bundles of parallel threads which are laid and fixed between said two external flat layers (3a,4a) according to the construction method as defined in the previous claims.

10. Sail as defined in the preceding claim, **characterised in that** the bearing layer of cap (1), tack (2) and clew (3) is composed of a fan-shaped series of bundles of parallel threads (F1, F2, F3,...Fn) originating from a rotation centre that coincides with the intersection area of the first and second bundle of parallel threads (F1 and F2) that are respectively laid along the two sides of the panel that are a segment of the external borders of the sail (V).

11. Sail as defined in claim 9, **characterised in that** the bearing layer of the intermediate panels (4 and 5) if composed of a fan-shaped series of bundles of parallel threads (F10, F20, ...), where each bundle is inclined with respect to the immediately preceding bundle and oriented in the same direction as the lines of force in the portion of the sail where the bundle of parallel threads is laid.

12. Sail as defined in claim 11, **characterised in that** in each intermediate panel the fan-shaped series of bundles of parallel threads originates from different imaginary rotation centres located outside of the panel.

13. Sail as defined in the preceding claims, **characterised in that** in each panel each bundle of parallel threads is the same as the other bundles in terms of width and number of threads.

14. Sail as defined in claims 9 to 12, **characterised in that** in each panel each bundle of parallel threads differs from the other bundles in terms of width and/or number of threads.

15. Sail as defined in the preceding claims, **characterised in that** in each panel each bundle of parallel threads has the same inclination angle as the preceding bundle.

16. Sail as defined in claims 9 to 14, **characterised in that** in each panel each bundle of parallel threads has a different inclination angle with respect to the preceding bundle.

## Patentansprüche

1. Methode zur Herstellung von dreidimensionalen Segeln, welche aus mehreren flachen, laminierten Paneelen (1, 2, 3, 4,5) bestehen, welche so miteinander verbunden sind, dass jedes flache, laminierte Paneel mindestens zwei Außenschichten (3a, 4a) umfasst, welche aus dünnen, flexiblen Folien aus einem hierfür geeigneten Material bestehen, zwischen denen sich eine ebenfalls flache Träger-Zwischenschicht befindet, welche aus einer Vielzahl von Fasern besteht, die entsprechend der das Paneel durchziehenden Kraftlinienrichtung angeordnet sind, wobei diese Methode **dadurch gekennzeichnet ist, dass** jedes laminierte Paneel gemäß dem folgenden Verfahren hergestellt wird:
a - Auslegen einer ersten Außenschicht (3a, 4a) auf einer Arbeitsfläche
b - Auslegen und Spannen eines ersten Bündels von angemessen ausgerichteten, parallelen Fasern (F1, F10), über der ersten Außenschicht (3a, 4a),
c - Auslegen und Spannen eines zweiten Bündels von angemessen ausgerichteten, parallelen Fasern (F2, F20), über der ersten Außenschicht (3a, 4a),
d - Auslegen und Spannen einer darauffolgenden Serie von Bündeln von angemessen ausgerichteten, parallelen Fasern zwischen dem ersten Faserbündel (F1, F10) und dem zweiten Faserbündel (F2, F20);
e - Auslegen und Verkleben einer zweiten Außenschicht (3a) über sämtlichen fächerförmig angeordneten Bündeln paralleler Fasern.

2. Methode gemäß dem vorstehenden Anspruch, **dadurch gekennzeichnet, dass** die Trägerschicht bei den Kopf- (1), Halshorn- (2) und Schothorn-Paneelen (3) aus einer Reihe fächerförmig angeordneter Bündel von parallelen Fasern (F1, F2, F3,...Fn) besteht, welche von einem Rotationszentrum ausgehen, das sich mit dem Überschneidungsbereich des ersten und des zweiten Bündels paralleler Fasern (F1 und F2) deckt, welche jeweils entlang der beiden Seiten des Paneels ausgelegt sind, welche ein Segment der Außenränder des Segels bilden (V).

3. Methode gemäß Anspruch 1, **dadurch gekennzeichnet, dass** die Trägerschicht im Bereich der Zwischenpaneele (4 und 5) aus einer Reihe von fächerförmig angeordneten Bündeln paralleler Fasern (F10, F20, ...) besteht, wobei jedes Bündel bezogen auf das unmittelbar vorausgehende geneigt und in dieselbe Richtung wie die Kraftlinien in dem Anteil des Segels ausgerichtet ist, in dem das Bündel paralleler Fasern ausgelegt ist.

4. Methode gemäß Anspruch 3, **dadurch gekennzeichnet, dass** die fächerförmig angeordneten Bündel paralleler Fasern im Zwischenpaneel von verschiedenen, außerhalb des Paneels befindlichen, gedachten Rotationszentren ausgehen.

5. Methode gemäß den vorstehenden Ansprüchen, **dadurch gekennzeichnet, dass** jedes Bündel paralleler Fasern in jedem Paneel bezüglich seiner Länge und der Anzahl von Fasern mit allen anderen Faserbündeln identisch ist.

6. Methode gemäß den Ansprüchen 1 bis 4, **dadurch gekennzeichnet, dass** sich jedes Bündel paralleler Fasern in jedem Paneel bezüglich seiner Länge und/oder der Anzahl von Fasern von den anderen unterscheiden kann.

7. Methode gemäß den vorstehenden Ansprüchen, **dadurch gekennzeichnet, dass** alle Bündel paralleler Fasern in jedem Paneel denselben Neigungswinkel wie das vorhergehende Bündel aufweisen.

8. Methode gemäß den Ansprüchen 1 bis 6, **dadurch gekennzeichnet, dass** jedes Bündel paralleler Fasern in jedem Paneel einen anderen Neigungswinkel wie das vorhergehenden Bündel aufweist.

9. Dreidimensionales Segel, welches aus mehreren flachen, laminierten Paneelen (1, 2, 3 , 4 ,5) besteht, welche so miteinander verbunden sind, dass jedes flache, laminierte Paneel mindestens zwei Außenschichten (3a, 4a) umfasst, welche aus dünnen flexiblen Folien aus einem hierfür geeigneten Material besteht, zwischen denen sich eine ebenfalls flache Träger-Zwischenschicht befindet, welche aus einer Vielzahl von Fasern besteht, die entsprechend der das Paneel durchziehenden Kraftlinienrichtung angeordnet sind, wobei das Segel **dadurch gekennzeichnet ist, dass** die Trägerschicht aus fächerförmigen Bündeln paralleler Fasern besteht, welche zwischen den beiden flachen Außenschichten (3a, 4a) gemäß der in den vorangehenden Ansprüchen erläuterten Herstellungsmethode ausgelegt und befestigt werden.

10. Segel gemäß dem vorstehenden Anspruch, **dadurch gekennzeichnet, dass** die Trägerschicht bei den Kopf- (1), Halshorn- (2) und Schothorn-Paneelen (3) aus einer Reihe fächerförmig angeordneter Bündel paralleler Fasern (F1, F2, F3,...Fn) besteht, welche von einem Rotationszentrum ausgehen, das sich mit dem Überschneidungsbereich des ersten und des zweiten Bündels paralleler Fasern (F1 und F2) deckt, welche jeweils entlang der beiden Seiten des Paneels ausgelegt sind, welche ein Segment der Außenränder des Segels bilden (V).

11. Segel gemäß Anspruch 9, **dadurch gekennzeichnet, dass** die Trägerschicht im Bereich der Zwischenpaneele (4 und 5) aus einer Reihe von fächerförmig angeordneten Bündeln paralleler Fasern ( F10, F20, ...) besteht, wobei jedes Bündel bezogen auf das unmittelbar vorausgehende geneigt und in dieselbe Richtung wie die Kraftlinien in dem Anteil des Segels ausgerichtet ist, in dem das Bündel paralleler Fasern ausgelegt ist.

12. Segel gemäß Anspruch 11, **dadurch gekennzeichnet, dass** die fächerförmig angeordneten Bündel paralleler Fasern im Zwischenpaneel von verschiedenen, außerhalb des Paneels befindlichen, gedachten Rotationszentren ausgehen.

13. Segel gemäß den vorstehenden Ansprüchen, **dadurch gekennzeichnet, dass** jedes Bündel paralleler Fasern in jedem Paneel bezüglich seiner Länge und der Anzahl von Fasern mit allen anderen Faserbündeln identisch ist.

14. Segel gemäß den Ansprüchen 9 bis 12, **dadurch gekennzeichnet, dass** sich jedes Bündel paralleler Fasern in jedem Paneel bezüglich seiner Länge und/oder der Anzahl von Fasern von den anderen unterscheidet.

15. Segel gemäß den vorstehenden Ansprüchen, **dadurch gekennzeichnet, dass** alle Bündel paralleler Fasern in jedem Paneel denselben Neigungswinkel wie das vorhergehende Bündel aufweisen.

16. Segel gemäß den Ansprüchen 9 bis 14, **dadurch gekennzeichnet, dass** jedes Bündel paralleler Fasern in jedem Paneel einen anderen Neigungswinkel wie das vorhergehenden Bündel aufweist.

## Revendications

1. Méthode pour la fabrication de voiles tridimensionnelles, formées de plusieurs panneaux laminés plats (1, 2, 3, 4, 5) unis entre eux, du type prévoyant que chaque panneau laminé plat soit constitué d'au moins une paire de couches externes planes (3a, 4a), réalisées à l'aide de minces feuilles flexibles, en matériau idoine à l'usage, entre lesquelles une couche portante est interposée, elle aussi plane, réalisée à l'aide d'une multitude de fils disposés selon la direction des lignes de force qui traversent le panneau, méthode **caractérisée en ce qu'**elle prévoit que chacun des dits panneaux laminés soit réalisé en appliquant la méthode d'usinage suivante :
a - déploiement d'une première couche externe (3a, 4a) sur un établi de travail ;
b - déploiement et mise en tension d'un premier paquet de fils parallèles (F1, F10), opportunément orienté, sur la première couche externe (3a, 4a) ;
c - déploiement et mise en tension d'un deuxième paquet de fils parallèles (F2, F20), opportunément orienté, sur dite couche externe (3a, 4a) ;
d - déploiement et mise en tension d'une série successive de paquets intermèdes de fils parallèles, opportunément orientés et distribués sur la zone comprise entre le premier (F1, F10) et le deuxième paquet de fils (F2, F20) ;
e - déploiement et collage d'une seconde couche externe (3a, 4a) sur l'éventail de tous les paquets de fils parallèles.

2. Méthode selon la revendication précédente, **caractérisée en ce qu'**elle prévoit que dite couche portante soit réalisée, en correspondance des panneaux de têtière (1), d'amure (2) et d'écoute (3), par un éventail de paquets de fils parallèles (F1, F2, F3,...Fn), qui se déploient à partir d'un centre de rotation, coïncidant avec la zone d'intersection du premier et du deuxième paquet de fils parallèles (F1 et F2), qui sont respectivement disposés en proximité et le long des deux côtés du panneau qui successivement formeront un segment des bords externes de la voile (V).

3. Méthode selon la revendication 1, **caractérisée en ce qu'**elle prévoit que dite couche portante soit réalisée, en correspondance des panneaux intermèdes (4 et 5), par un éventail de paquets de fils parallèles (F10, F20, ...), où chaque paquet résulte incliné par rapport à celui immédiatement précédent et orienté dans la même direction de celle qu'ont les lignes de force en correspondance de la bande longue de la voile, où est déployé le paquet de fils parallèles.

4. Méthode selon la revendication 3, **caractérisée en ce qu'**au sein du panneau intermède même, l'éventail de paquets de fils parallèles se déploie à partir de différents centres imaginaires de rotation disposés à l'extérieur du panneau même.

5. Méthode selon les revendications précédentes, **caractérisée en ce qu'**elle prévoit qu'au sein de chaque panneau, chaque paquet de fils parallèles peut être identique à tous les autres en ce qui concerne sa largeur et son nombre de fils.

6. Méthode selon les revendications de 1 à 4, **caractérisée en ce qu'**elle prévoit qu'au sein de chaque panneau, chaque paquet de fils parallèles peut être différent des autres en ce qui concerne sa largeur et/ou son nombre de fils.

7. Méthode selon les revendications précédentes, **caractérisée en ce qu'**elle prévoit qu'au sein de chaque panneau, tous les paquets de fils parallèles présentent le même angle d'inclinaison par rapport au paquet précédent.

8. Méthode selon les revendications de 1 à 6 **caractérisée en ce qu'**elle prévoit qu'au sein de chaque panneau tous les paquets de fils parallèles ne présentent pas le même angle d'inclinaison par rapport au paquet précédent.

9. Voile tridimensionnelle, formée de plusieurs panneaux laminés plats (1, 2, 3, 4, 5) unis entre eux, où chaque panneau laminé plat est constitué d'au moins une paire de couches externes plates (3a, 4a), réalisées à l'aide de minces feuilles flexibles, en matériau idoine à l'usage, entre lesquelles une couche portante est interposée, elle aussi plane, réalisée à l'aide d'une multitude de fils disposés selon la direction des lignes de force qui traversent le panneau, voile **caractérisée en ce que** dite couche portante est formée par un éventail de paquets de fils parallèles qui sont déployés et fixés entre dite paire de couches externes plates (3a, 4a) selon la méthode de fabrication indiquée dans les revendications précédentes.

10. Voile selon la revendication précédente, **caractérisée en ce que** dite couche portante est réalisée, en correspondance des panneaux de têtière (1), d'amure (2) et d'écoute (3), par un éventail de paquets de fils parallèles (F1, F2, F3,...Fn), qui se déploient à partir d'un centre de rotation, coïncidant avec la zone d'intersection du premier et du deuxième paquet de fils parallèles (F1 et F2), qui sont respectivement disposés en proximité et le long des deux côtés du panneau qui successivement formeront un segment des bords externes de la voile (V).

11. Voile selon la revendication 9, **caractérisée en ce que** dite couche portante est réalisée, en correspondance des panneaux intermèdes (4 et 5) par un éventail de paquets de fils parallèles (F10, F20, ...), où chaque paquet résulte incliné par rapport à celui immédiatement précédent et orienté dans la même direction de celle qu'ont les lignes de force en correspondance de la bande longue de la voile, où est déployé le paquet de fils parallèles.

12. Voile selon la revendication 11, **caractérisée en ce qu'**au sein du panneau intermède même, l'éventail de paquets de fils parallèles se déploie à partir de différents centres imaginaires de rotation disposés à l'extérieur du panneau même.

13. Voile selon les revendications précédentes, **caractérisée en ce qu'**elle prévoit qu'au sein de chaque panneau, chaque paquet de fils parallèles peut être identique à tous les autres en ce qui concerne sa largeur et son nombre de fils.

14. Voile selon les revendications de 9 à 12, **caractérisée en ce qu'**elle prévoit qu'au sein de chaque panneau, chaque paquet de fils parallèles est différent des autres en ce qui concerne sa largeur et/ou son nombre de fils.

15. Voile selon les revendications précédentes, **caractérisée en ce qu'**elle prévoit qu'au sein de chaque panneau, tous les paquets de fils parallèles présentent le même angle d'inclinaison par rapport au paquet précédent.

16. Voile selon les revendications de 9 à 14, **caractérisée en ce qu'**au sein de chaque panneau, tous les paquets de fils parallèles ne présentent pas le même angle d'inclinaison par rapport au paquet précédent.
